(19) Europäisches Patentamt
European Patent Office
Office européen des brevets

(11) **EP 1 745 476 B1**

(12) **EUROPEAN PATENT SPECIFICATION**

(45) Date of publication and mention
of the grant of the patent:
**26.03.2008 Bulletin 2008/13**

(51) Int Cl.:
**G11B 7/12** *(2006.01)* **G11B 7/125** *(2006.01)*
**G11B 7/135** *(2006.01)*

(21) Application number: **05732781.9**

(22) Date of filing: **27.04.2005**

(86) International application number:
**PCT/IB2005/051374**

(87) International publication number:
**WO 2005/106864 (10.11.2005 Gazette 2005/45)**

(54) **OPTICAL READER/WRITER WITH DEDICATED FOCUS TRACKING BEAM**

OPTISCHE LESE-/SCHREIBVORRICHTUNG MIT SPEZIELLEM FOKUS-TRACKING-STRAHL

LECTEUR/SCRIPTEUR OPTIQUE A FAISCEAU DE POURSUITE DE FOYER SPECIALISE

(84) Designated Contracting States:
**AT BE BG CH CY CZ DE DK EE ES FI FR GB GR
HU IE IS IT LI LT LU MC NL PL PT RO SE SI SK TR**

(30) Priority: **04.05.2004 EP 04101910**

(43) Date of publication of application:
**24.01.2007 Bulletin 2007/04**

(73) Proprietor: **Koninklijke Philips Electronics N.V.
5621 BA Eindhoven (NL)**

(72) Inventors:
• **BUSCH, Christopher,
Société Civile SPID
F-75008 Paris (FR)**
• **VAN DER LEE, Alexander,
Société Civile SPID
F-75008 Paris (FR)**

(74) Representative: **van Oudheusden-Perset, Laure E.
et al
Société Civile SPID
156, Boulevard Haussmann
75008 Paris (FR)**

(56) References cited:
**US-A- 4 680 745        US-A- 5 295 125**

• **PATENT ABSTRACTS OF JAPAN vol. 009, no. 048
(P-338), 28 February 1985 (1985-02-28) & JP 59
185044 A (NIPPON DENSHIN DENWA KOSHA), 20
October 1984 (1984-10-20)**
• **PATENT ABSTRACTS OF JAPAN vol. 016, no. 404
(P-1410), 26 August 1992 (1992-08-26) & JP 04
134732 A (NIPPON TELEGR & TELEPH CORP
<NTT>), 8 May 1992 (1992-05-08)**

**Description**

**FIELD OF THE INVENTION**

The present invention relates to an optical reader for a two dimensional storage disc, comprising means for generating a plurality of laser beams and projecting said beams onto a rotating disc, means for detecting the beams after being diffracted by the disc, and means for determining a focus error signal based on one of the plurality of beams.

**BACKGROUND OF THE INVENTION**

Conventionally, optical storage is performed in one dimension, i.e. a track of consecutive bits is written onto the disc (e.g. CD, DVD). Recently, the concept of two dimensional optical storage has been introduced. The format of a 2D disc is based on a broad spiral, consisting of a number of parallel bit rows. Parallel read out is realized using a single laser beam which passes through a diffraction grating producing an array of spots scanning the full width of the broad spiral. Such a system is disclosed in "Two-Dimensional Optical Storage", by Wim M.J. Coene, OSA Topical Meetings on Optical Data Storage, May 11-14, 2003, Technical Digest, pp 90 - 92.
For focus tracking of the laser, a focus error signal is generated using conventional methods (e.g. Foucault, astigmatic, spot size) based on the central spot of the array. However, the small separation between spots (in the order of micrometers) causes the spots to overlaps very quickly when out of focus. In the overlap region the intensity profile is highly distorted because of interference from adjacent spots, which disturbs the focus signal. As a result, the capture range, or focus S-curve length, is significantly reduced. While a conventional one dimensional optical reader (e.g. a CD ROM drive) has a capture range of around 2-5 micrometers, a two dimensional reader may have a capture range less than one micrometer. The problem is also present during writing of a disc.
With regards to one dimensional optical storage, CD and DVD systems are typically operated with different types of tracking methods, i.e. single spot, multiple spot. In order to provide both types of reading in the same optical reader, such readers are sometimes provided with two different lasers, having different wavelengths, and a wavelength dependent optical element in the laser path. Such a reader is disclosed in EP 1069555. The optical element is a grating made of a birefringent material, adapted to act as a grating and thus diffracting light from one of the lasers (having one of the wavelengths), while leaving light from the second laser (having another wavelength) unaffected.

**SUMMARY OF THE INVENTION**

It is an object of the present invention to overcome this problem, and to provide a two dimensional optical reader/writer with improved focus tracking.
It is a further object to provide a two dimensional optical reader/writer with improved capture range.
These and other objects are achieved by an optical reader/writer of the kind mentioned in the introduction, wherein said plurality of beams comprises an array of beams having a first wavelength, and a dedicated focus tracking beam having a second wavelength, and wherein said focus error signal is based on said focus tracking beam. According to the invention, beams having one wavelength is used for the actual accessing of the data on the disc, while a beam having a second wavelength is used for focus tracking. The focus tracking can then be based on one single beam, without interference from adjacent beams.
The focus tracking beam may coincide with one of the beams, preferably the central beam, of the beam array. This ensures that the reflected beam used for focus tracking is reflected in a spot that is actually used during read-out/ writing. The likelihood of achieving acceptable focus in most of the array beams (i.e. even if they are mutually unaligned) is increased by using the central beam.
The means for detecting the beams preferably comprises a beam separator for separating the dedicated focus tracking beam from the array of beams. This provides for separation of the dedicated focus tracking beam from the read-out/writing beams, and thus facilitates application of tracking methods, such as the Foucault method. In the case of reading, the read-out beams must also be separated in order to enable processing of the high frequency data, while in the case of writing, it may be enough to distinguish the focus beam. The beam separator can comprise a dichroic mirror, arranged to reflect the array of read-out beams in one direction, and the dedicated focus tracking beam in a different direction. Such wavelength dependent beam splitters are known in the art.
Alternatively, the beam separator can comprise a diffraction element being adapted to transmit light having said first wavelength while blocking light having said second wavelength. Such a wavelength dependent diffraction element can be realized by means of a binary grating.
According to one embodiment of the invention, the laser generating means can comprise two lasers for generating two laser beams having said first and second wavelengths respectively, and a diffraction element arranged in the optical path of both beams, said diffraction element being adapted to diffract light having said first wavelength while transmitting light having said second wavelength.

Such a wavelength dependent diffraction element is known per se, and is described e.g. in EP 1069555, mentioned above. However, in the reader according to EP 1069555, light of only one wavelength at a time is used selectively to read different types of optical discs (CD and DVD respectively), and the purpose of the diffraction element is to provide different diffraction depending on the currently selected wavelength. The purpose of the present invention is instead, as mentioned above, to provide a dedicated focus tracking beam by using laser light of two different wavelengths simultaneously. Letting the two laser beams pass through a diffraction element as described in EP 1069555 is only one possible embodiment of the invention.

The diffraction element can be a binary grating having a grating depth essentially satisfying:

$$h(n-1) = l\lambda_1 + \varphi_{step}/2\pi \text{ and } h(n-1) = m\lambda_2,$$

where h is the grating depth, n is the index of refraction of the grating, $\lambda_1$ and $\lambda_1$ are the two wavelengths, $\varphi_{step}$ is the desired phase step, and 1 and m are integers. Such a grating is reasonably easy to realize.

According to a different embodiment, the laser generating means comprises a first laser for generating a first laser beam having said first wavelength, a diffraction element for diffracting said first laser beam into an array of laser beams, a second laser for generating a second laser beam having said second wavelength, and means for merging said array of beams with said second beam.

This embodiment does not require a wavelength dependent grating as mentioned above, but instead merges laser beams having different wavelengths together after one of them has been diffracted into an array of beams.

These and other aspects of the invention will be apparent from and will be elucidated with reference to the embodiments described hereinafter.

## BRIEF DESCRIPTION OF THE DRAWINGS

The present invention will now be described in more detail, by way of example, with reference to the accompanying drawings, wherein:

- Fig 1 shows the layout of two dimensional storage on an optical disc,
- Fig 2 shows parallel read-out of the disc in fig 1 according to prior art,
- Fig 3 shows schematically a set-up for an optical reader according to a first embodiment of the present invention,
- Fig 4 shows schematically a set-up for an optical reader according to a second embodiment of the present invention.

## DETAILED DESCRIPTION OF THE INVENTION

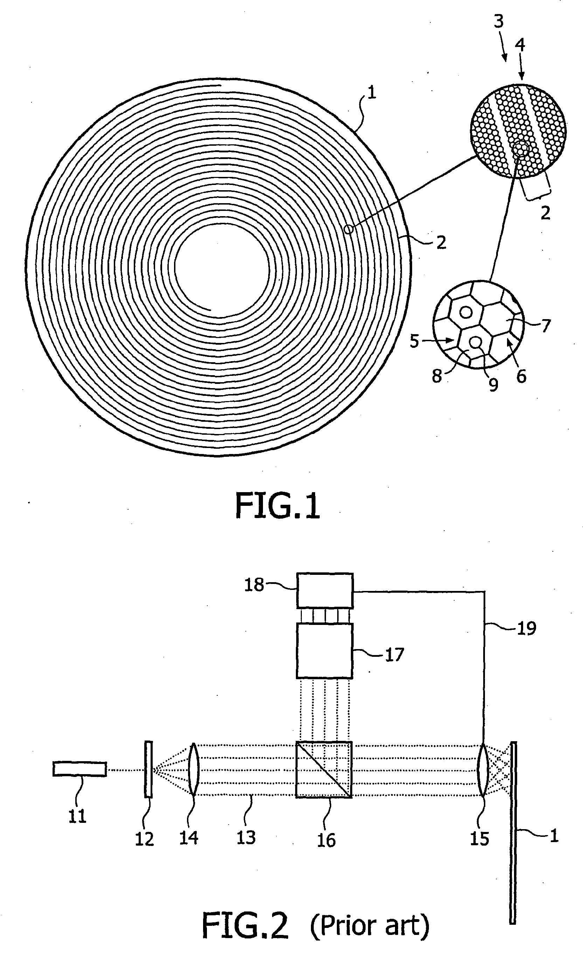

The principles of two dimensional storage on an optical disc 1 is illustrated in fig 1. The information is stored in a broad spiral 2, comprising a number of parallel bit-rows 3, here five rows, and a guard band 4. In the example in fig 1, the bit-rows 3 are aligned with each other in the radial direction to form a hexagonal lattice of bits. This means that each bit 5, 6 is associated with a physical hexagonal bit-cell 7, 8. Typically, the bit-cell 7 of a bit with value zero has a uniformly flat area, while a bit-cell 8 for a bit with value one has a hole 9 centrally in the hexagonal area. The size of such a hole 9 is preferably comparable with or smaller than half of the bit-cell area, in order to eliminate signal folding, i.e. a cluster of zeroes and a cluster of ones would both result in a perfect mirror.

Fig 2 shows how parallel read-out from the disc in fig 1 is realized conventionally, using a laser beam 11 which passes through a diffraction grating 12 which produces an array of beams 13 which are focused onto the disc 1 by a collimator lens 14 and an objective lens 15, to form an array of spots across the entire width of the spiral 2. Each beam 13 is reflected and diffracted by the disc 1, and is then reflected by a beam splitter 16 and detected by a multi-partitioned photo-detector 17 which generates a number of high frequency waveforms used as input for 2D signal processing, performed in a processor 18. The processor 18 also provides a focus tracking signal 19 to the objective lens 15, by calculating a focus error signal based on the central spot. Such a system is described in "Two-Dimensional Optical Storage", by Wim M.J. Coene, OSA Topical Meetings on Optical Data Storage, May 11-14, 2003, Technical Digest, pp 90 - 92, herewith incorporated by reference.

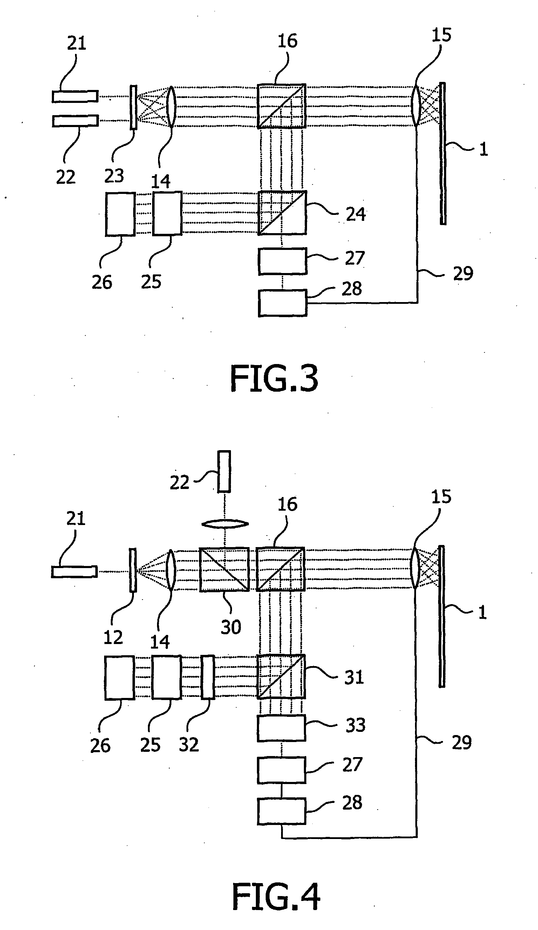

A first embodiment of the invention is shown in fig 3, where elements corresponding to elements in fig 2 are denoted with identical reference numerals. According to the invention, the optical reader comprises two lasers 21, 22 generating laser beams of different wavelengths, e.g. one red and one blue. One of these laser beams is then diffracted into an array of beams, while the second is used as a dedicated focus tracking beam. In the embodiment in fig 3, a wavelength dependent diffraction element 23, here a binary grating, is arranged in the optical path of both lasers. The grating is adapted to act as a diffraction element for one of the beams (e.g. the blue beam), while being transparent for the other beam (e.g. the red beam).

This can be accomplished with a binary grating where the grating depth of the grating is such that for one wavelength the required phase depth is achieved and for the other wavelength the phase depth is a multiple of $2\pi$. In equation form, this corresponds to:

$$h(n-1) = l\lambda_1 + \varphi_{step}/2\pi \text{ and } h(n-1) = m\lambda_2,$$

where h is the grating depth, n is the index of refraction of the grating, $\lambda_1$ and $\lambda_1$ are the two wavelengths, $\varphi_{step}$ is the desired phase step, and 1 and m are integers.

The two initial laser beams can be arranged to coincide, such that, after the diffraction, the undiffracted focus beam will coincide with the central beam of the beam array.

The beam array and the dedicated focus tracking beam are then focused onto the disc and reflected in a similar way as was described above with reference to fig 2. The reflected beams are then directed into a beam separator 24, adapted to separate the reflected beam array, comprising the high frequency read-out data, from the reflected focus beam. In the embodiment in fig 3, this separation is accomplished by a wavelength dependent beam splitter, here including a dichroic mirror.

The high frequent read-out data is directed to an optical multi-partitioned photo-detector 25 which generates a number of high frequency waveforms used as input for 2D signal processing in a processor 26, essentially in the same way as described above with reference to fig 2. The focus beam is instead directed to another photo-detector 27 and another processor 28, which generates a focus tracking signal 29. This signal is used to track the optical system 15, as described above.

A second embodiment of the invention is shown in fig 4, where only one 21 of the two lasers 21, 22 is directed into a diffraction element 12 to generate the beam array. This diffraction element does not have to be wavelength sensitive, but can be of conventional kind, like the one in fig 1. The second laser beam is then merged into the beam array using a transmissive mirror 30 (i.e. an inverted beam splitter).

Further, in the embodiment in fig 4, the reflected beams are separated using a beam splitter 31 and two wavelength dependent diffraction elements 32, 33. Each element 32, 33 is adapted to be transmissive for one of the wavelengths, and blocking for the other. This could be implemented in a so-called LDGU structure. As a result, the high frequency data will pass the element 32 and hit the optical detector 25, while the focus beam will pass the element 33 and hit the optical detector 27. The further processing corresponds to the embodiment in fig 3.

The person skilled in the art realizes that the present invention by no means is limited to the preferred embodiments described above. On the contrary, many modifications and variations are possible within the scope of the appended claims. For example, although the invention has been described with reference to an optical reader, the invention is equally applicable to an optical writer, where the same focus tracking is required.

Any reference sign in a claim should not be construed as limiting the claim. Use of the verb "to comprise" and its conjugations does not exclude the presence of elements or steps other than those stated in a claim. Use of the article "a" or "an" preceding an element or step does not exclude the presence of a plurality of such elements or steps.

**Claims**

1. An optical reader/writer for a two dimensional storage disc, comprising:

   means (21, 22, 23, 14, 16, 15; 21, 22, 12, 30) for generating a plurality of laser beams and projecting said beams onto a rotating disc,
   means (24, 25, 26; 31, 32, 25, 26) for detecting the beams after being diffracted by the disc, and
   means (24, 27, 28; 31, 33, 27, 28) for determining a focus error signal (29) based on one of said plurality of beams, **characterized in that**
   said plurality of beams comprises an array of beams having a first wavelength, and a dedicated focus tracking beam having a second wavelength, and
   wherein said focus error signal (29) is based on said focus tracking beam.

2. An optical reader/writer according to claim 1, wherein said focus tracking beam coincides with one of the beams, preferably the central beam, of the beam array.

3. An optical reader/writer according to claim 1, wherein said means for detecting the beams comprises a beam separator (24, 31, 32, 33) for separating the dedicated focus tracking beam from the array of beams.

4. An optical reader/writer according to claim 3, wherein said beam separator (24) comprises a dichroic mirror, arranged to reflect the array of read-out beams in one direction, and the dedicated focus tacking beam in a different direction.

5. An optical reader/writer according to claim 3, wherein said beam separator comprises a diffraction element (32) being adapted to transmit light having said first wavelength while blocking light having said second wavelength.

6. An optical reader/writer according to claim 1, wherein said laser generating means comprises two lasers (21, 22) for generating two laser beams having said first and second wavelengths respectively, and a diffraction element (23) arranged in the optical path of both beams, said diffraction element being adapted to diffract light having said first wavelength while transmitting light having said second wavelength.

7. An optical reader/writer according to claim 6, wherein said diffraction element (23) is a binary grating having a grating depth essentially satisfying:

$$h(n\text{-}1) = l\lambda_1 + \varphi_{step}/2\pi \text{ and } h(n\text{-}1) = m\lambda_2,$$

where h is the grating depth, n is the index of refraction of the grating, $\lambda_1$ and $\lambda_1$ are the two wavelengths, $\varphi_{step}$ is the desired phase step, and 1 and m are integers.

8. An optical reader/writer according to claim 1, wherein said laser generating means comprises a first laser (21) for generating a first laser beam having said first wavelength, a diffraction element (12) for diffracting said first laser beam into an array of laser means, a second laser (22) for generating a second laser beam having said second wavelength, and means (30) for merging said array of beams with said second beam.


**Patentansprüche**

1. Optische Lese-/Schreibvorrichtung für eine zweidimensionale Speicherplatte, welche umfasst:

Mittel (21, 22, 23, 14, 16, 15; 21, 22, 12, 30) zum Erzeugen einer Vielzahl von Laserstrahlen und Projizieren der Strahlen auf eine rotierende Platte,
Mittel (24, 25, 26; 31, 32, 25, 26) zum Detektieren der Strahlen, nachdem sie durch die Platte gebeugt wurden, und Mittel (24, 27, 28; 31, 33, 27, 28) zum Bestimmen eines Fokusfehlersignals (29), basierend auf einem von der Vielzahl von Strahlen, **dadurch gekennzeichnet, dass**
die Vielzahl von Strahlen eine Anordnung von Strahlen mit einer ersten Wellenlänge und einen speziellen Fokus-Tracking-Strahl mit einer zweiten Wellenlänge umfasst, und
wobei das Fokusfehlersignal (29) auf dem Fokus-Tracking-Strahl beruht.

2. Optische Lese-/Schreibvorrichtung nach Anspruch 1, wobei der Fokus-Tracking-Strahl mit einem der Strahlen, vorzugsweise dem mittleren Strahl, der Strahlenanordnung zusammenfällt.

3. Optische Lese-/Schreibvorrichtung nach Anspruch 1, wobei die Mittel zum Detektieren der Strahlen einen Strahlteiler (24, 31, 32, 33) zum Trennen des speziellen Fokus-Tracking-Strahls von der Anordnung von Strahlen umfassen.

4. Optische Lese-/Schreibvorrichtung nach Anspruch 3, wobei der Strahlteiler (24) einen dichroischen Spiegel umfasst, der so angeordnet ist, dass er die Anordnung von Auslesestrahlen in eine Richtung und den speziellen Fokus-Tracking-Strahl in eine andere Richtung reflektiert.

5. Optische Lese-/Schreibvorrichtung nach Anspruch 3, wobei der Strahlteiler ein Beugungselement (32) umfasst, das so beschaffen ist, dass es Licht mit der ersten Wellenlänge durchlässt, während es Licht mit der zweiten Wellenlänge blockiert.

6. Optische Lese-/Schreibvorrichtung nach Anspruch 1, wobei das Laserstrahlen erzeugende Mittel zwei Laser (21, 22) zum Erzeugen von zwei Laserstrahlen mit der ersten bzw. zweiten Wellenlänge und ein Beugungselement (23), das im optischen Weg beider Strahlen angeordnet ist, umfasst, wobei das Beugungselement so beschaffen ist, dass es Licht mit der ersten Wellenlänge beugt, während es Licht mit der zweiten Wellenlänge durchlässt.

**7.** Optische Lese-/Schreibvorrichtung nach Anspruch 6, wobei das Beugungselement (23) ein binäres Gitter mit einer Gittertiefe ist, die im Wesentlichen folgenden Beziehungen genügt:

$$h(n\text{-}1) = l\lambda_1 + \varphi_{step}/2\pi \text{ und } h(n\text{-}1) = m\lambda_2,$$

wobei h die Gittertiefe ist, n der Brechungsindex des Gitters ist, $\lambda_1$ und $\lambda_2$ die zwei Wellenlängen sind, $\varphi_{step}$ der gewünschte Phasenschritt ist und 1 und m ganze Zahlen sind.

**8.** Optische Lese-/Schreibvorrichtung nach Anspruch 1, wobei das Laserstrahlen erzeugende Mittel einen ersten Laser (21) zum Erzeugen eines ersten Laserstrahls mit der ersten Wellenlänge, ein Beugungselement (12) zum Beugen des ersten Laserstrahls in eine Anordnung von Laserstrahlen, einen zweiten Laser (22) zum Erzeugen eines zweiten Laserstrahls mit der zweiten Wellenlänge und Mittel (30) zum Zusammenführen der Anordnung von Strahlen mit dem zweiten Strahl umfasst.

## Revendications

**1.** Lecteur / scripteur optique pour un disque de stockage à deux dimensions, comprenant :

des moyens (21, 22, 23, 14, 16, 15 ; 21, 22, 12, 30) pour générer une pluralité de faisceaux laser et projeter lesdits faisceaux laser sur un disque en rotation,
des moyens (24, 25, 26 ; 31, 32, 25, 26) pour détecter les faisceaux après que ceux-ci aient été diffractés par le disque, et
des moyens (24, 27, 28 ; 31, 33, 27, 28) pour déterminer un signal d'erreur de foyer (29) basé sur un de ladite pluralité de faisceaux, **caractérisé en ce que** :

ladite pluralité de faisceaux comprend une matrice de faisceaux ayant une première longueur d'onde et un faisceau dédié de poursuite de foyer ayant une deuxième longueur d'onde, et
où ledit signal d'erreur de foyer (29) est basé sur ledit faisceau de poursuite de foyer.

**2.** Lecteur / scripteur optique selon la revendication 1, dans lequel ledit faisceau de poursuite de foyer coïncide avec un des faisceaux de la matrice de faisceaux, de préférence le faisceau central.

**3.** Lecteur / scripteur optique selon la revendication 1, dans lequel lesdits moyens pour détecter les faisceaux comprennent un séparateur de faisceau (24, 31, 32, 33) pour séparer le faisceau dédié de poursuite de foyer de la matrice de faisceaux.

**4.** Lecteur / scripteur optique selon la revendication 3, dans lequel ledit séparateur de faisceau (24) comprend un miroir dichroïque, disposé pour réfléchir la matrice de faisceaux de lecture dans une direction et le faisceau dédié de poursuite de foyer dans une direction différente.

**5.** Lecteur / scripteur optique selon la revendication 3, dans lequel ledit séparateur de faisceau comprend un élément diffractant (32) à même de transmettre une lumière ayant ladite première longueur d'onde en bloquant une lumière ayant ladite deuxième longueur d'onde.

**6.** Lecteur / scripteur optique selon la revendication 1, dans lequel ledit moyen générateur laser comprend deux lasers (21, 22) pour générer deux faisceaux laser qui ont respectivement lesdites première et deuxième longueurs d'onde, et un élément diffractant (23) disposé dans le chemin optique des deux faisceaux, ledit élément diffractant étant à même de diffracter une lumière qui a ladite première longueur d'onde en transmettant une lumière qui a ladite deuxième longueur d'onde.

**7.** Lecteur / scripteur optique selon la revendication 6, dans lequel ledit élément diffractant (23) est un réseau binaire qui a une profondeur de gravure qui satisfait essentiellement à :

$$h\,(n - l) = l\,\lambda_1 + \varphi_{step}\,/\,2\,\pi\ \text{et}\ h\,(n - l) = m\,\lambda_2$$

où h est la profondeur de gravure, n est l'indice de réfraction du réseau, $\lambda_1$ et $\lambda_2$ sont les deux longueurs d'ondes, $\varphi_{step}$ est le gradin de phase souhaité, et 1 et m sont des nombres entiers.

8. Lecteur / scripteur optique selon la revendication 1, dans lequel ledit moyen de génération laser comprend un premier laser (21) pour générer un premier faisceau laser qui a ladite première longueur d'onde, un élément diffractant (12) pour diffracter ledit premier faisceau laser en une matrice de faisceaux laser, un deuxième laser (22) pour générer un deuxième faisceau laser qui a ladite deuxième longueur d'onde, et un moyen (30) pour fusionner ladite matrice de faisceaux avec ledit deuxième faisceau.

**FIG.1**

**FIG.2** (Prior art)

FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1069555 A


**Non-patent literature cited in the description**

- **WIM M.J. COENE.** Two-Dimensional Optical Storage. *OSA Topical Meetings on Optical Data Storage,* 11 May 2003, 90-92